# EUROPEAN PATENT APPLICATION

(11) **EP 4 649 849 A2**
(43) Date of publication of application: **19.11.2025**
(21) Application number: 25175011.3
(22) Date of filing: 08.05.2025
(51) Int. Cl.: A42B 3/04, F41H 1/04, H01M 50/247, H01M 50/264, H02J 7/00

(54) **BATTERY CELL CONTAINER AND INTERFACE ASSEMBLY FOR SAME**

(30) Priority: 15.05.2024 US 202463647911 P
(71) Applicant: Wilcox Industries Corp., Newington, NH 03801 (US)
(72) Inventor: GRAHAM, Patrick K., Newington (US); TURNER, Elliott S., Newington (US); WELLS, Robert A., Newington (US); RIEL, Robert E., Newington (US)
(74) Representative: FRKelly

(57) **Abstract**

A battery pack receiver assembly (112) for detachably securing a battery pack (104) to a helmet (122) mounted device comprises a frame (124) comprising a first battery pack engaging feature for engaging the battery pack. An interface plate (128) comprises a second battery pack engaging feature. The frame is slidably coupled to the interface plate and movable between battery pack retaining and releasing positions. A biasing member is configured to bias the frame toward the battery pack retaining position. The frame is manually movable to the battery pack releasing position by a user grasping the battery pack. The second battery pack engaging feature is configured to positively retain the battery pack when the frame is in the battery pack retaining position and disengage with the battery pack when the frame is in the battery pack releasing position. Preferably, the apparatus is configured to permit one-handed battery pack replacement without removing the device from the helmet.

## Description

### CROSS-REFERENCE TO RELATED APPLICATION

This application claims the priority benefit of U.S. Provisional Patent Application No. 63/647,911 filed May 15, 2024.

### BACKGROUND

The present disclosure relates generally to battery pack attachments systems for helmet mounting apparatuses and, in particular, a new and improved battery cell container and interface assembly for same.

### SUMMARY

In one aspect, a battery pack receiver assembly for securing a detachable battery pack to a helmet mounted device comprises a frame comprising a first battery pack engaging feature configured to engage the battery pack and an interface plate comprising a second battery pack engaging feature configured to engage the battery pack. The frame is slidably coupled to the interface plate and movable between a battery pack retaining position and a battery pack releasing position. A biasing member is coupled to the frame and is configured to bias the frame toward the battery pack retaining position. The frame is manually movable from the battery pack retaining position to the battery pack releasing position by a user grasping the battery pack when the battery pack is in engagement with the first battery pack engaging feature. The second battery pack engaging feature is configured to positively retain the battery pack when the frame is in the battery pack retaining position and disengage with the battery pack when the frame is in the battery pack releasing position.

In a more limited aspect, the second battery pack engaging feature is capable of engagement with the battery pack by a user grasping the battery pack with one hand and wherein the frame is manually movable to the battery pack releasing position by a user grasping the battery pack with one hand.

In another more limited aspect, the frame comprises first and second opposing, axially-extending rails extending between a first end thereof and a second end thereof and first and second transverse members. A first transverse member extends between the first and second rails at the first end and a second transverse member extends between the first and second rails at the second end. The first battery pack engaging feature comprises a movable retention hook disposed on the first transverse member and the second battery pack engaging feature comprising a fixed retention hook disposed on the interface plate.

In another more limited aspect, the biasing member comprises one or more spring members disposed intermediate the second transverse member and the interface plate and configured to urge the frame toward the battery pack retaining position.

In another more limited aspect, the battery pack receiver assembly further comprises a plurality of electrical contacts carried on the interface plate and configured to operatively couple with a plurality of contacts on the battery pack when the back pack is coupled to the battery pack receiver assembly.

In another more limited aspect, the interface plate is configured to detachably couple to a battery pack which adheres to an established battery interface standard.

In another more limited aspect, the established battery interface standard is a Small Tactical Universal Battery (STUB) standard.

In a further aspect, a battery pack interface assembly for detachable coupling to a battery pack receiver assembly comprises a first surface configured to detachably engage with the battery pack receiver assembly, the first surface having a first plurality of electrical contacts configured to engage a respective second plurality of electrical contacts on the battery pack receiver assembly. A second surface is configured to engage with a battery container, the second surface having one or more electrical connectors configured to electrically couple the first plurality of electrical contacts to one or more batteries disposed within the battery container.

In a more limited aspect, the first surface adheres to an established battery interface standard.

In another more limited aspect, the established battery interface standard is a Small Tactical Universal Battery (STUB) standard.

In a further aspect, a battery pack comprises a battery pack interface assembly for detachable coupling to a battery pack receiver assembly and includes a battery cell container coupled to the battery pack interface assembly. The battery pack interface assembly comprises a first surface configured to detachably engage with the battery pack receiver assembly, the first surface having a first plurality of electrical contacts configured to engage a respective second plurality of electrical contacts on the battery pack receiver assembly. The battery pack interface assembly further comprises a second surface configured to engage with a battery cell container, the second surface having one or more electrical connectors configured to electrically couple the first plurality of electrical contacts to one or more batteries disposed within the battery cell container.

In a more limited aspect, the battery cell container is configured to receive one or more battery cells selected from the group consisting of L92 battery cells, 18650 battery cells, and CR123A battery cells.

In another more limited aspect, the first surface adheres to an established battery interface standard.

In another more limited aspect, the established battery interface standard is a Small Tactical Universal Battery (STUB) standard.

In a further aspect, a modular system of components comprising two or more battery packs as disclosed herein, each of the two or more battery packs being interchangeably attachable to the battery pack receiver assembly, wherein each of the two or more battery packs is configured to receive a different type of battery cell.

One advantage of the present development invention is found in that it enables a user to remove and replace battery packs on a helmet mounted device with one hand and without the need to remove the device. In this manner, the present development facilitates quick and efficient battery replacement and ease of use in constrained or high-stress environments.

Various advantages and benefits of the present invention will become apparent to persons skilled in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of a battery mounting and bridge assembly configured for attachment to a battery mounting fixture on a helmet.
FIG. 2 is an isometric view of a battery mounting and bridge assembly appearing in FIG. 1, illustrating the manner of attaching and detaching a battery pack.
FIG. 3 is an isometric view of a battery mounting and bridge assembly appearing in FIG. 1 with both battery packs removed.
FIG. 4 is a front view of a battery pack receiver assembly.
FIG. 5A is side view of the battery pack receiver assembly in the locked position.
FIG. 5B is a side view of the battery pack receiver assembly in the unlocked position.
FIG. 6 is an exploded view of the battery pack receiver assembly.
FIG. 7 is a first partially exploded isometric view of a first embodiment battery pack.
FIG. 8 is a second partially exploded isometric view of the battery pack appearing in FIG. 7.
FIG. 9 is a partially exploded isometric view of a second embodiment battery pack.
FIG. 10 is a partially exploded isometric view of a third embodiment battery pack.
FIG. 11 is a side view illustrating the manner of attaching the battery pack to the battery pack receiver assembly.
FIG. 12 is a side view illustrating the battery pack attached to the battery pack receiver assembly.
FIG. 13 is a schematic diagram of an exemplary battery pack.
FIG. 14 is a functional block diagram of an exemplary helmet system operable to embody the present development.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

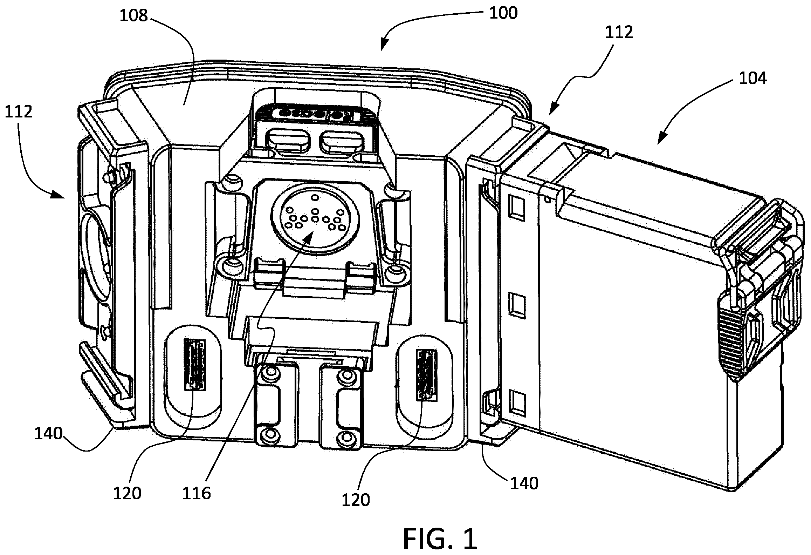

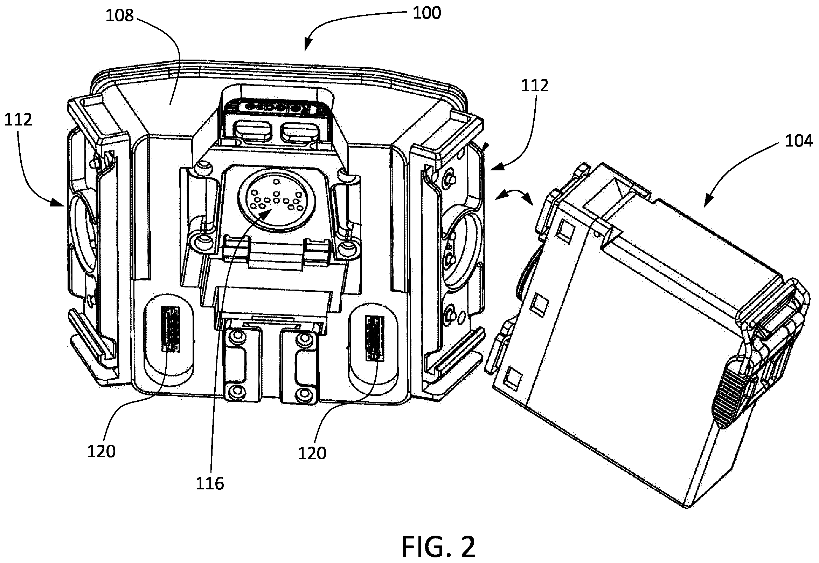

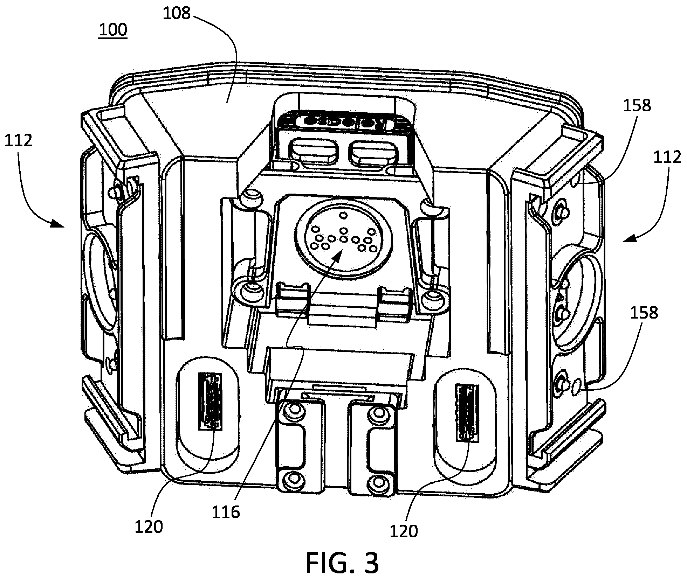

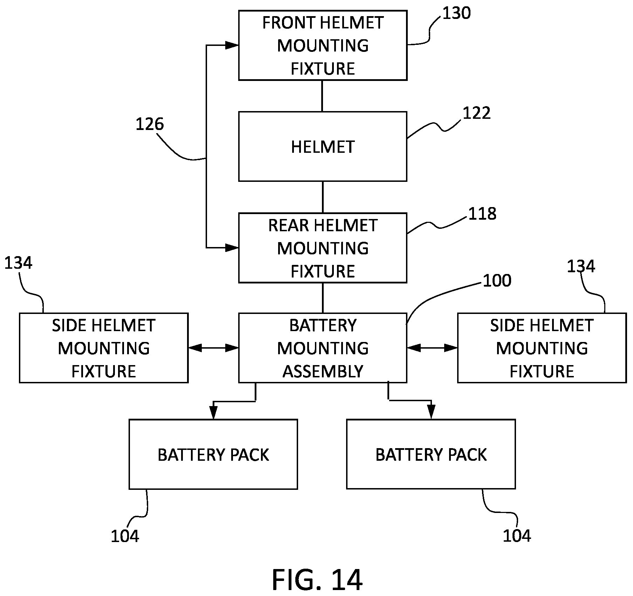

Referring now to the drawings, FIGS. 1 and 2 illustrate an exemplary battery mounting assembly **100** having an exemplary battery pack **104** detachably coupled thereto. FIG. 3 illustrates the battery mounting assembly **100** with the battery pack **104** removed. The battery mounting assembly **100** includes a housing **108** having first and second battery pack receiver assemblies **112** for attaching two (left and right) battery packs **104.** In the illustrated embodiment, the battery mounting assembly **100** includes a mounting receptacle **116** configured to attach to a mounting fixture **118** (see FIG. 14) on a helmet **122** (see FIG. 14), wherein the fixture may be a component of a helmet mounting system such as a Universal Helmet Mount Assembly (Wilcox Industries Corp., Newington, NH).

As best seen in FIG. 14, there is shown an exemplary helmet mounting system which includes a helmet **122,** such as a military or tactical helmet having a rear mounting fixture **118** and a front mounting fixture **130.** The battery mounting assembly **100** is coupled to the rear mounting fixture **118** which, in turn, may be detachably coupled to first and second battery packs **104.** In embodiments, the battery mounting assembly **100** is operably coupled to first and second side helmet mounting fixtures **134,** wherein the battery mounting assembly **100** wherein the battery mounting assembly **100** serves as a bridge between the first and second side helmet mounting fixtures **134.**

Referring again to FIGS. 1 and 2, in certain embodiments, the battery mounting assembly **100** is configured to be coupled to the rear helmet mounting fixture **118** which is further configured to transmit power as well as data and/or control signals **126** to a front helmet mounting fixture **130.** It will be recognized that the present development may be adapted for other helmet mounted or head borne power supply systems.

In the illustrated embodiment, the battery mounting assembly **100** further includes left and right power, data, and control connectors **120** which are configured to interface with side accessory mounting fixtures or shrouds (not shown) disposed on opposing sides of the associated helmet. The housing **108** encloses circuitry configured to operably power accessories on any of the front and side mounting fixtures using either the left or right battery pack and to function as a bridge or link for transmitting data and/or control signals between accessories coupled to the front helmet mounting fixture **130** and one more, e.g., left and right, side mounting fixtures **134** of the associated helmet mounting system.

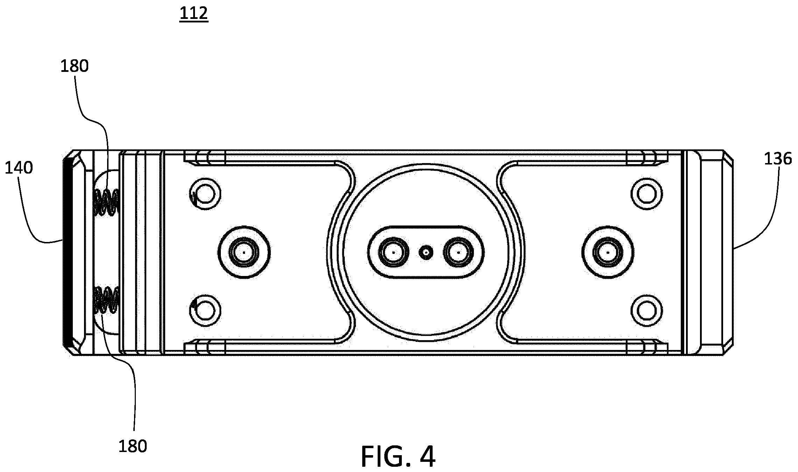

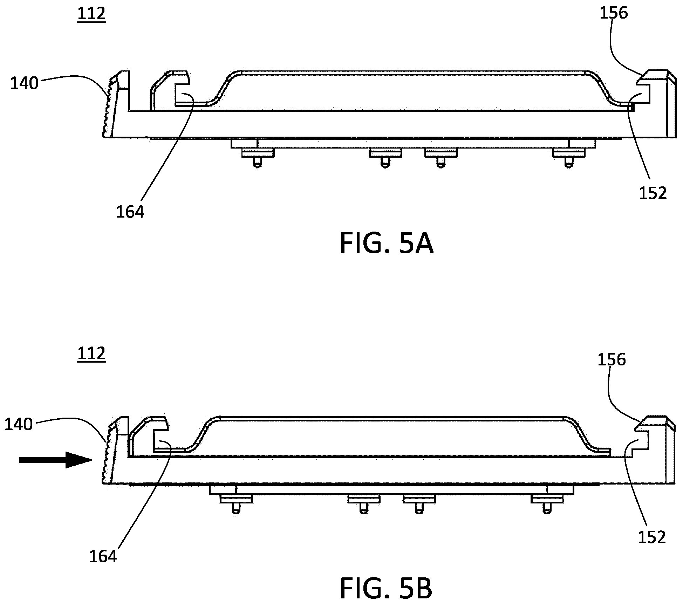

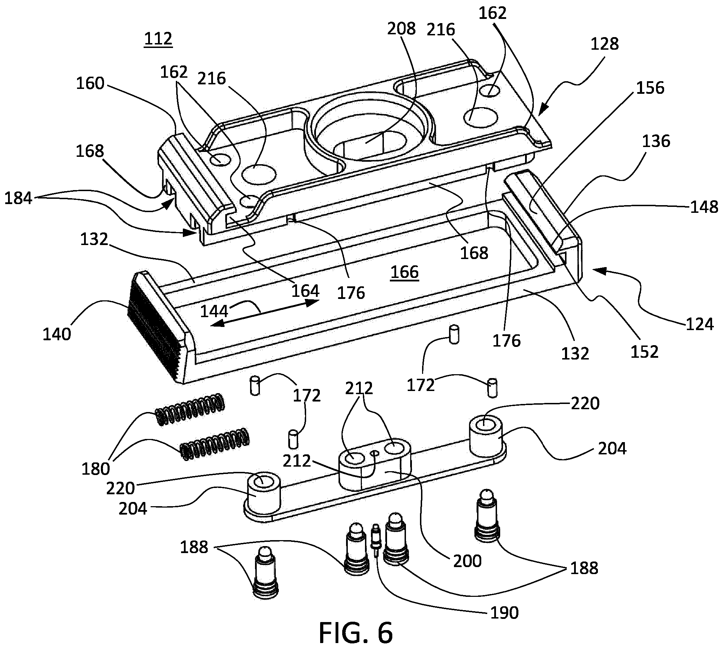

FIGS. 4, 5A, 5B, and 6 illustrate the battery pack receiver assembly **112,** which includes a sliding frame **124** and an interface plate **128.** The sliding frame **124** includes a pair of opposing, axially extending rails **132.** A first upstanding wall **136** extends transversely between the first and second rails **132** at a first end of the sliding frame **124** and a second upstanding wall **140** extends transversely between the first and second rails **132** at a second end of the sliding frame **124.**

The interface plate **128** is disposed on the first and second rails **132** intermediate the first and second upstanding walls **136, 140,** wherein the frame **124** is slidable in the axial direction as indicated by the arrow **144.** A movable retention hook **148** is disposed on the first upstanding wall **136** and defines a channel **152.** A bevel or chamfer **156** is disposed on an exterior facing edge of the hook **148.** A fixed retention hook **160** is disposed on the interface plate **128** and defines a channel **164.** The interface plate **128** is rigidly affixed to the main body of the battery mounting assembly **100** by threaded fasteners **158** (see FIG. 3) which pass through clearance openings **162** in the interface plate **128** and threadably engage the battery mounting assembly **100,** such that the frame **124** is slidable in the direction **144** in relation thereto.

The sliding frame **124** includes a central opening or aperture **166.** Guide rails **168** disposed on the undersurface of the interface plate **128** are received within the central opening **166,** which is dimensioned to permit a range of sliding movement in the axial direction **144.** Bearings or guide pins **172** are received within complementary notches **176** in the guide rails **168** and serve to reduce wear and friction between the interface plate **128** and the sliding frame **124** and help maintain alignment therebetween.

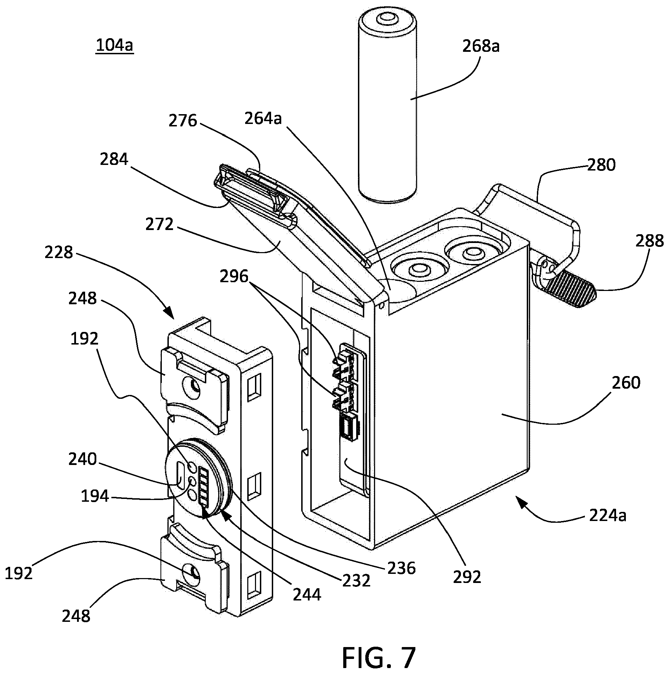

One or more spring members **180** are disposed within receptacles **184** on the interface plate **128** and bear against the second upstanding wall **140** to apply a compression force between the interface plate **128** and the sliding frame **124.** A plurality of electrical power contacts **188** and a control signal contact **190** are carried on the interface plate and are configured to operatively couple with a plurality of contacts **192, 194** (see FIG. 7) on the battery pack **104.** In the illustrated embodiment, the pins **188** are spring-loaded (e.g., pogo) type pins. In the illustrated embodiment, an insulator body **196** includes a central boss **200** and opposing end bosses **204.** The central boss **200** is received in an aligned opening **208** in the interface plate **128.** The central boss **200** includes a plurality of openings **212** receiving ones of the pins **188.** The end bosses **204** are received in an aligned openings **216** in the interface plate **128.** The end bosses **204** each include an opening **220** receiving a respective one of the pins **188.**

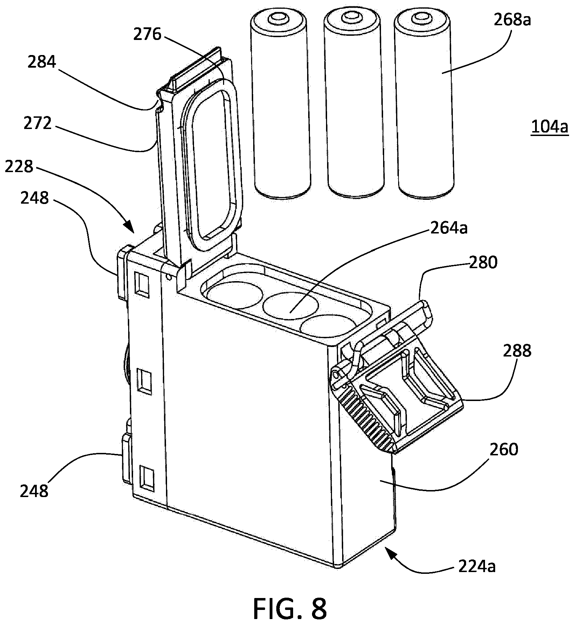

Referring now to FIGS. 7 and 8, there appears a first embodiment battery pack **104a** which includes a container portion **224a** and an interface assembly **228.** In embodiments, the interface is compatible with an established standard. As used herein the term "established standard" refers to a set of specifications, protocols, or requirements established by a recognized authority, such as a military organization or government agency, a standards development organization, or through the publication of an Interface Control Document (ICD). In embodiments, the interface assembly **228** is compatible with a Small Tactical Universal Battery (STUB) interface standard.

The interface assembly **228** includes a center terminal **232.** The center terminal **232** includes an elastomeric sealing ring **236** for sealing between the terminal **232** and the interface plate **128.** The terminal **232** includes a USB-C charging port **240,** power terminals **192,** a control signal terminal **194,** and state of charge indicia **244.**

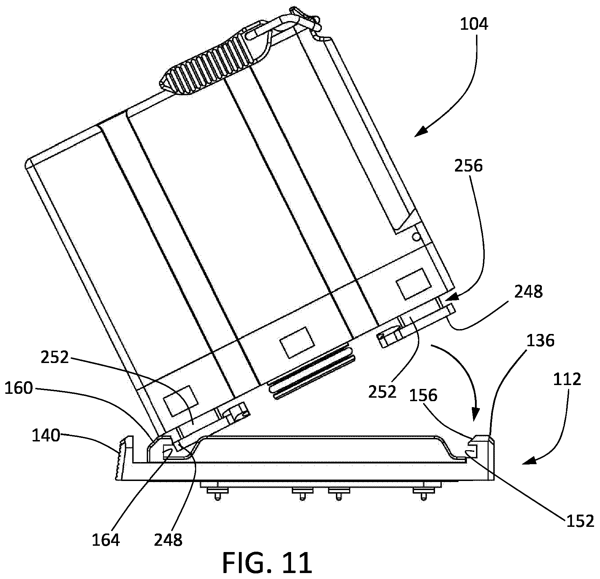

Tabs **248** are disposed at opposing ends of the interface assembly **228** and are supported on respective posts or bosses **252** (see FIG. 11) to define a peripheral retention channel **256** (see FIG. 11) between the tabs **248** and the interface assembly **228.**

The container portion **224a** includes a housing **260** having a plurality of battery cell receptacles **264a** for receiving a plurality of battery cells **268a.** A hinged lid **272** is secured to the housing **260.** An elastomeric sealing ring **276** is provided to prevent entry of moisture or other contamination. A latch member **280** releasably engages a groove or catch **284** on the lid **272.** A latch lever **288** is provided for latching and unlatching the lid **272.** A circuit board **292,** such as a flex circuit on a flexible film substrate, is disposed within the housing **260** and includes circuitry for electrically coupling the battery cells **268a** to electrical contacts **296.** The electrical contacts **296,** in turn, are in electrical communication with electrical contacts **298** (see FIG. 14) on the interface assembly **228.**

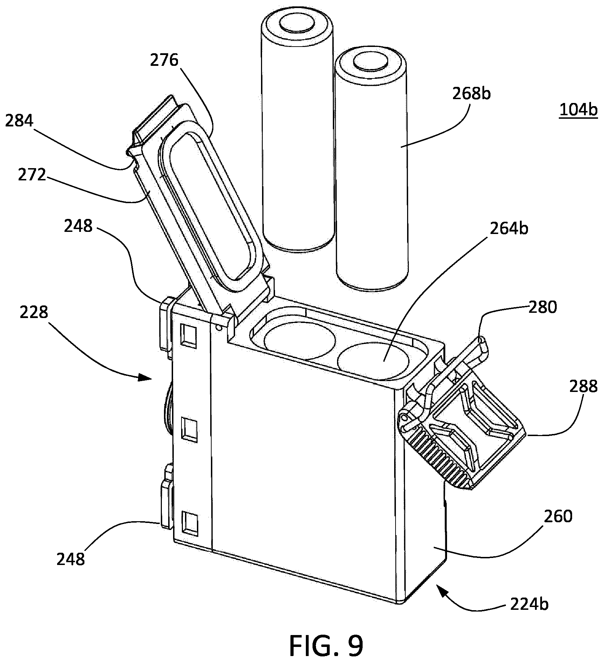

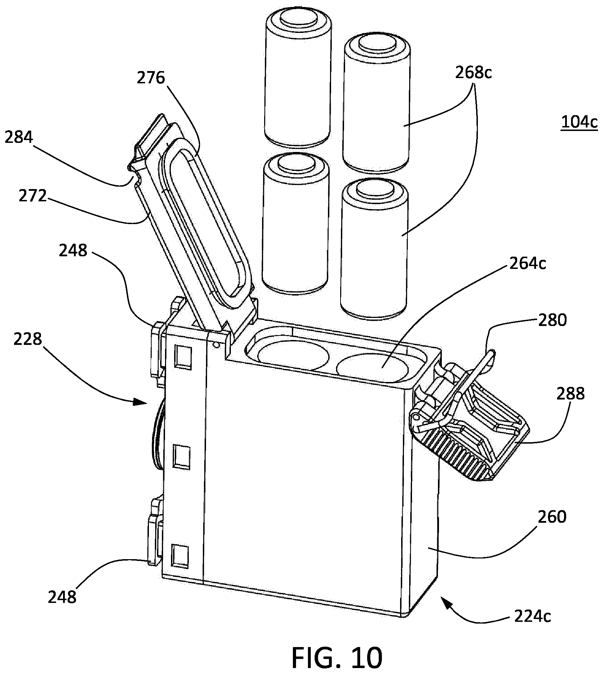

The container portion **224a** appearing in FIGS. 7 and 8 includes three receptacles **264a** configured to receive three L92 or AA battery cells **268a.** Referring now to FIG. 9, there appears a second embodiment battery pack **104b** which is as described above by way of reference to the first embodiment battery pack **104a,** except that the container portion **224b** includes two receptacles **264b** configured to receive two 18650 battery cells. Referring now to FIG. 10, there appears a third embodiment battery pack **104c** which is as described above by way of reference to the first embodiment battery pack **104a,** except that the container portion **224c** includes two receptacles **264c** configured to receive a total of four CR123A battery cells. It will be recognized that still further embodiments are contemplated wherein the container portion is configured to receive other numbers and types of battery cells, including rechargeable and non-rechargeable battery cells, including without limitation, alkaline, lithium, lithium ion, lithium polymer, lithium manganese (IMR), CR123, 14500, 18350, 26650, and others.

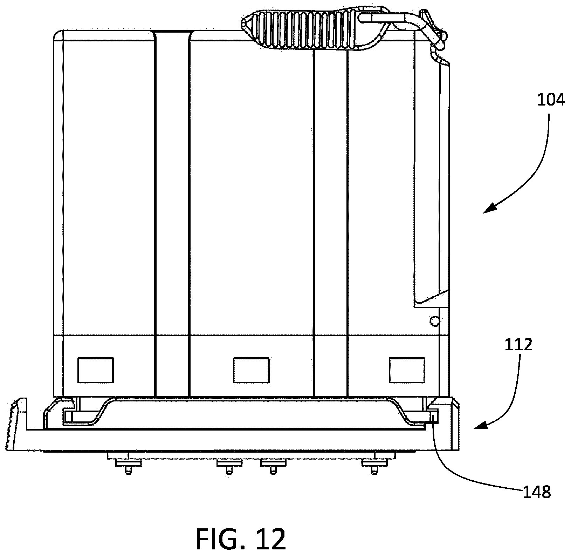

Referring now to FIGS. 11 and 12, to couple the battery pack **104** to the battery pack receiver assembly **112,** one edge of the interface assembly **228** is manually placed into engagement with the fixed hook **160** such that the tab **248** is received within the channel **164** and the distal end of the hook **160** is received within the channel **256.** The opposite edge of the battery pack **104** is pivoted down until the opposing tab **248** engages the beveled edge **156** of the movable hook **148.** Pressure against the beveled edge **156** creates a wedging action which causes the sliding frame **124** to slide in relation to the interface plate **128** such that the first upstanding wall **136** is moved away from the interface plate **128,** thereby compressing the one or more spring members **180.** The movement of the first upstanding wall **136** provides clearance for the tab **248** to move therepast. After the tab **248** has moved past the hook **148,** the compression force of the one or more spring members **180** causes the sliding frame **124** to slide in relation to the interface plate **128** such that the first upstanding wall **136** is moved back toward the interface plate **128,** wherein the hook **148** is received within the channel **256** and the tab **248** is received within the channel **152,** as shown in FIG. 12. To remove the battery pack **104,** the second upstanding wall **140** is manually pressed (upward in the orientation shown in FIG. 1) against the urging of the one or more spring members **180** and the process is reversed. In embodiments, the exterior facing surface of the second upstanding wall **140** may be texture, e.g., by providing ridges or knurls, for enhances manipulation.

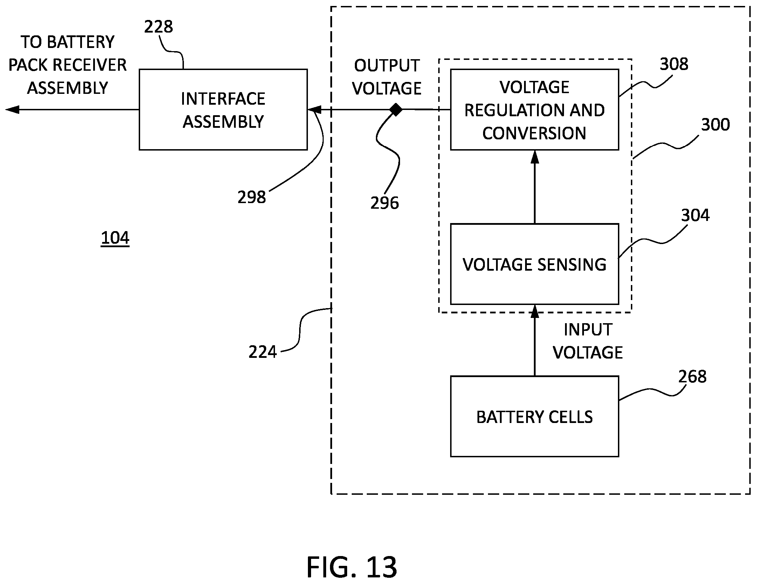

Referring now to FIG. 13, there is shown a schematic of an exemplary battery pack **104** which includes circuitry **300** configured to sense an input DC voltage from the battery cells **268** and convert it to a suitable output DC voltage. In certain embodiments, the circuitry **300** includes a voltage sensing circuit **304** for sensing an input voltage from the battery cells **268** and a voltage regulation and conversion circuit **308** for converting the input voltage to a suitable output voltage. In preferred embodiments, a sensed input voltage is converted to specified and negotiated power delivery (PD) contracts between the battery pack and the host device. In certain embodiments, the PD contracts may conform to a known standard, such as the USB Power Delivery (USB PD) specification. In certain embodiments, the battery pack **244** includes an integrated coulomb counter configured to provide accurate measurement of the state of charge of the battery pack. In embodiments which a visual indication of the stat of charge is displayable on the state of charge indicia **244.**

In certain embodiments, the base design of the battery pack **104** is battery pack is configured to accommodate a variety of different cell types, chemistries, or voltages wherein the circuitry **300** is adaptable based on the characteristics of the connected cells **268.** In this manner, the battery pack base architecture is modular, enabling use with different battery cell types through selection of appropriate electrical and mechanical interfaces. In embodiments, the circuitry **300** is configured to determine what type of cell(s) **268** are connected by measuring an electrical parameter of the cell(s) **268,** such as a voltage measurement and identifying the type or configuration of cell(s) **268** based at least in part on the measured electrical parameter. The circuitry **300** then provides a suitable output voltage to the host device. The suitable output voltage may be determined based on the specified and negotiated PD contracts between the battery pack and the host device, as described above.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A battery pack receiver assembly for detachably securing a battery pack to a helmet mounted device, comprising:
a frame comprising a first battery pack engaging feature configured to engage the battery pack;
an interface plate comprising a second battery pack engaging feature configured to engage the battery pack, wherein the frame is slidably coupled to the interface plate, the frame movable between a battery pack retaining position and a battery pack releasing position;
a biasing member coupled to the frame and configured to bias the frame toward the battery pack retaining position;
the frame manually movable from the battery pack retaining position to the battery pack releasing position by a user grasping the battery pack when the battery pack is in engagement with the first battery pack engaging feature,
wherein the second battery pack engaging feature is configured to positively retain the battery pack when the frame is in the battery pack retaining position and
wherein the second battery pack engaging feature is configured to disengage with the battery pack when the frame is in the battery pack releasing position.

2. The battery pack receiver assembly of claim 1, wherein the second battery pack engaging feature is capable of engagement with the battery pack by a user grasping the battery pack with one hand and wherein the frame is manually movable to the battery pack releasing position by a user grasping the battery pack with one hand.

3. The battery pack receiver assembly of claim 1 or claim 2, wherein the frame comprises:
first and second opposing, axially-extending rails extending between a first end thereof and a second end thereof and first and second transverse members;
a first transverse member extending between the first and second rails at the first end and a second transverse member extending between the first and second rails at the second end;
said first battery pack engaging feature comprising a movable retention hook disposed on the first transverse member; and
said second battery pack engaging feature comprising a fixed retention hook disposed on the interface plate.

4. The battery pack receiver assembly of claim 3, wherein the biasing member comprises one or more spring members disposed intermediate the second transverse member and the interface plate and configured to urge the frame toward the battery pack retaining position.

5. The battery pack receiver assembly of any of the preceding claims, further comprising a plurality of electrical contacts carried on the interface plate and configured to operatively couple with a plurality of contacts on the battery pack when the back pack is coupled to the battery pack receiver assembly.

6. The battery pack receiver assembly of any of the preceding claims, wherein the interface plate is configured to detachably couple to a battery pack which adheres to an established battery interface standard.

7. The battery pack receiver assembly of claim 6, wherein the established battery interface standard is a Small Tactical Universal Battery (STUB) standard.

8. A battery pack interface assembly for detachable coupling to a battery pack receiver assembly, the battery pack interface assembly comprising:
a first surface configured to detachably engage with the battery pack receiver assembly, the first surface having a first plurality of electrical contacts configured to engage a respective second plurality of electrical contacts on the battery pack receiver assembly; and
a second surface configured to engage with a battery container, the second surface having one or more electrical connectors configured to electrically couple the first plurality of electrical contacts to one or more batteries disposed within the battery container.

9. The battery pack interface assembly of claim 8, wherein the first surface adheres to an established battery interface standard.

10. The battery pack interface assembly of claim 9, wherein the established battery interface standard is a Small Tactical Universal Battery (STUB) standard.

11. A battery pack comprising:
a battery pack interface assembly for detachable coupling to a battery pack receiver assembly;
a battery cell container coupled to the battery pack interface assembly;
said battery pack interface assembly comprising a first surface configured to detachably engage with the battery pack receiver assembly, the first surface having a first plurality of electrical contacts configured to engage a respective second plurality of electrical contacts on the battery pack receiver assembly;
said battery pack interface assembly further comprising a second surface configured to engage with a battery cell container, the second surface having one or more electrical connectors configured to electrically couple the first plurality of electrical contacts to one or more batteries disposed within the battery cell container.

12. The battery pack of claim 11, wherein the battery cell container is configured to receive one or more battery cells selected from the group consisting of L92 battery cells, 18650 battery cells, and CR123A battery cells.

13. The battery pack of claim 11 or claim 12, wherein the first surface adheres to an established battery interface standard.

14. The battery pack of claim 13, wherein the established battery interface standard is a Small Tactical Universal Battery (STUB) standard.

15. A modular system of components comprising two or more battery packs of claim 11, each of said two or more battery packs being interchangeably attachable to the battery pack receiver assembly, wherein each of said two or more battery packs is configured to receive a different type of battery cell.
